# EUROPÄISCHE PATENTANMELDUNG

(11) **EP 2 144 319 A1**
(43) Veröffentlichungstag der Anmeldung: **13.01.2010**
(21) Anmeldenummer: 08012393.8
(22) Anmeldetag: 09.07.2008
(51) Int. Cl.: H01M 8/10, C08J 5/22, B01D 67/00, B01D 69/12, B01D 71/38

(54) **Verfahren zum Herstellen einer protonenleitfähigen, strukturierten Elektrolytmembran**

(71) Anmelder: Micronas GmbH, 79108 Freiburg i. Br. (DE)
(72) Erfinder: Erdler, Gilbert, 79100 Freiburg (DE); Reinecke, Holger, 79312 Emmendingen (DE); Müller, Claas, 79104 Freiburg (DE); Frank, Mirko, 79098 Freiburg (DE); Kerres, Jochen, 73760 Ostfildern (DE)
(74) Vertreter: Huwer, Andreas

(57) **Zusammenfassung**

Bei einem Verfahren zum Herstellen einer protonenleitfähigen, strukturierten Elektrolytmembran (11), insbesondere für eine Brennstoffzelle (1), wird auf eine Festkörperoberfläche eine Beschichtung (8) aufgebracht, die zumindest eine ionenleitfähige, wenigstens eine Säuregruppe aufweisende, Vernetzungskomponente und mindestens eine damit zusammenwirkende photoaktive Substanz enthält. Die Beschichtung (8) wird optisch maskiert, indem mindestens ein Bereich der Beschichtung, in dem die Elektrolytmembran sein (11) soll, derart belichtet wird, dass die Vernetzungskomponente mit der photoaktiven Substanz zu einem an der Festkörperoberfiäche anhaftenden Polymer- und/oder Copolymernetzwerk vernetzt. Zum Strukturierten der Elektrolytmembran (11) wird mindestens ein unbelichteter Bereich der Beschichtung (8) entfernt. (Fig. 1l)

## Beschreibung

Die Erfindung betrifft ein Verfahren zum Herstellen einer protonenleitfähigen, strukturierten Elektrolytmembran, insbesondere für eine Brennstoffzelle.

Batterien und Akkumulatoren lassen sich durch Brennstoffzellen ersetzen. Diese weisen üblicherweise einen Wasserstoffspeicher, eine als Anode dienende erste Elektrode, eine als Kathode dienende zweite Elektrode und eine zwischen den Elektroden befindliche Membran auf, die mit dem Wasserstoffspeicher verbunden ist. Die Membran ist für Protonen durchlässig und für Wasserstoff undurchlässig. Bei Mikrobrennstoffzellen wird meist eine unter der Bezeichnung DuPont™ Nafion® PFSA Membran im Handel erhältliche Folie als Elektrolytmembran verwendet. Die Elektrolytmembran enthält chemisch stabilisierte Sulfonsäuregruppen, die eine hohe lonenleitföhigkeit ermöglichen

Bei einem aus der Praxis bekannten Verfahren wird bei der Herstellung der Brennstoffzelle die Folie durch Zuschneiden strukturiert und in die benötigte Form gebracht. Danach wird die Folie zwischen den Elektroden angeordnet. Üblicherweise werden mehrere solcher Brennstoffzellen übereinander gestapelt und in Reihe geschaltet. Die Folie hat jedoch den Nachteil, dass sie nur eine begrenzte Miniaturisierung der Brennstoffzelle ermöglicht, weil die strukturierte Folie nur noch schlecht handhabbar ist, wenn ihre Abmessungen klein sind. Ungünstig ist außerdem, dass beim Zurechtschneiden der Folie Toleranzen auftreten, welche die Miniaturisierung der Brennstoffzelle erschweren.

In T. Pinochat et al., "A new proton-conducting porous silicon membrane for small fuel cells", Chemical Engineering Journal 101 (2004), Seite 107-111 ist ferner ein Verfahren zum Herstellen einer strukturierten Elektrolytmembran bekannt, bei dem ein Silizium-Wafer beidseitig mit einer durch Sputtern aufgetragenen metallischen Schicht beschichtet wird. Auf diese Schicht wird dann eine Maske aus einem Fotolack aufgebracht und danach wird an den Stellen, an denen kein Fotolack angeordnet ist, die Wandstärke des Wafers durch beidseitiges Ätzen des Slliziums reduziert, um eine offenporige Silizium-Membran zu bilden, die eine Fläche von etwa 3 mm x 3 mm aufweist Die Silizium-Membran wird dann mit einer Nafion^{®}-Lösung befüllt und danach wird das darin enthaltene Lösungsmittel verdunstet, so dass nur noch das Nafion® in den Poren zurückbleibt. Auch dieses Verfahren ermöglicht nur eine begrenzte Miniaturisierung der Membran, da das Beladen der Silizium-Membran mit der Nafion^{®}-Lösung bei kleinen Membranabmessungen schwierig ist.

Es besteht deshalb die Aufgabe, ein Verfahren der eingangs genannten Art zu schaffen, das auf einfache Weise einen hohen Miniaturisierungsgrad der Elektrolytmembran ermöglicht.

Diese Aufgabe wird durch ein Verfahren zum Herstellen einer protonenleitfähigen, strukturierten Elektrolytmembran, insbesondere für eine Brennstoffzelle, gelöst, bei dem auf eine Festkörperoberfläche eine Beschichtung aufgebracht wird, die zumindest eine ionenleitfähige, wenigstens eine Säuregruppe aufweisende, Vernetzungskomponente und mindestens eine damit zusammenwirkende photoaktive Substanz enthält, wobei die Beschichtung optisch maskiert wird, indem mindestens ein Bereich der Beschichtung, in dem die Elektrolytmembran sein soll, derart belichtet wird, dass die Vernetzungskomponente mit der photoaktiven Substanz zu einem an der Festkörperoberfläche anhaftenden Polymer- und/oder Copolymernetzwerk vernetzt, und dass danach zum Strukturieren der Elektrolytmembran mindestens ein unbelichteter Bereich der Beschichtung entfernt wird.

In vorteilhafter Weise wird bei dem erfindungsgemäßen Verfahren die auf die Festkörperoberfläche aufgebrachte Beschichtung mittels eines Standard-Lithographieprozesses strukturiert. Dabei wird an den Stellen, an denen optische Strahlung, wie z.B. UV-Licht, auf die Beschichtung auftrifft, die photoaktive Substanz aktiviert und dadurch eine Kreuzvernetzung gestartet. Die nicht belichteten, unvernetzten Bereiche der Beschichtung werden anschließend entfernt, beispielsweise durch flächiges Inkontaktbringen der Beschichtung mit einem Entwickler, in dem sich die unvernetzte Vernetzungskomponente und ggf die photoaktive Substanz löst. Mit Hilfe des Verfahrens kann eine fein strukturierte Elektrolytmembran mit sehr kompakten Abmessungen hergestellt werden.

Bei einer vorteilhaften Ausführungsform des Verfahrens werden die Vernetzungskomponente und die mindestens eine photoaktive Substanz in einem Lösungsmittel gelöst auf die Festkörperoberfläche vorzugsweise durch Spin Coating aufgetragen, und danach wird das Lösungsmittel zum Bilden der Beschichtung verdunstet. Die Beschichtung wird also mit einem in der Halbleiterindustrie etablierten und erprobten Verfahrensschritt, nämlich dem Spin Coating aufgetragen. Das Verfahren kann somit gut in einen Standard-Halbleiterfertigungsprozess integriert werden.

Die Vernetzungskomponente weist vorzugsweise mindestens eine Säuregruppe auf, insbesondere eine Sulfonsäuregruppe, eine Phosporsäuregruppe und/oder eine Carbonsäuregruppe. Die nach dem Verfahren hergestellte Elektrolyfimembran weist dann eine hohe Protonenleitfähigkeit auf

Vorteilhaft ist, wenn die Vernetzungskomponente sulfoniertes Polyetherketon und/oder sulfoniertes Polyetheretherketon enthält. Das sulfonierte Polyetheretherketon kann folgende Strukturformeln aufweisen:

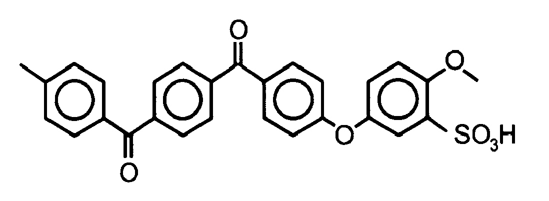

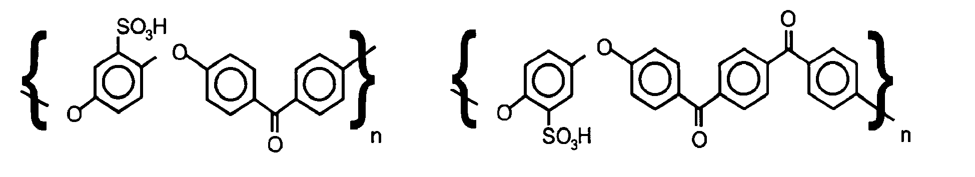

Die Elektrolytmembran weist dann eine noch größere Protonenleitfähigkeit auf

Bei einer bevorzugten Ausgestaltung der Erfindung enthält die photoaktive Substanz einen Photoinitiator, insbesondere 2,4,6-Trimethylbenzoyldiphenylphosphinoxid. Dieser Photoinitiator ist unter der Bezeichnung Lucirin® TPO-L im Handel erhältlich und weist folgende Strukturformel auf

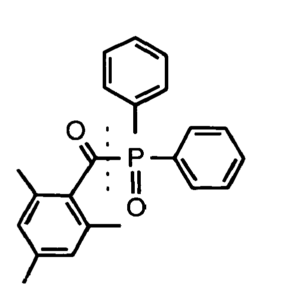

Zweckmäßigerweise enthält die photoaktive Substanz ein Copolymer, insbesondere Trimethylolpropantriacetat. Dieses Copolymer ist unter der Bezeichnung Laromer^{®} TMPTA im Handel erhältlich und weist folgende Strukturformel auf

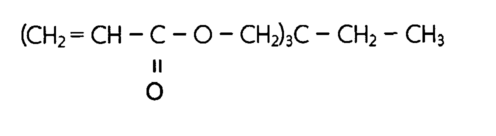

Vorteilhaft ist, wenn die Beschichtung eine Haftvermittlerkomponente enthält, vorzugsweise Polybenzimidazol. Dadurch kann die Haftung der Elektrolytmembran insbesondere auf einem in ein Siliziumsubstrat integrierten Metallhydridwasserstoffspeicher verbessert werden. Die Strukturformel von Polybenzimidazol lautet: ([NH-C=CH-C=CH-CH=C-N=C-]2-[C=CH-C=CH-CH=CH-])n bzw.

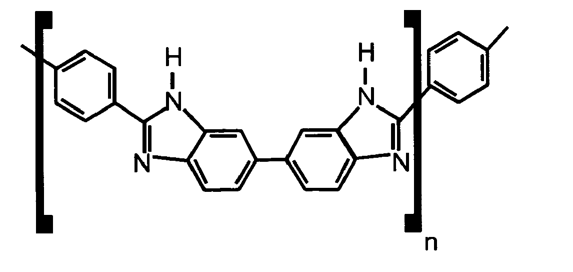

Das erfindungsgemäße Verfahren kann in ein Verfahren zum Herstellen mindestens einer Brennstoffzelle integriert sein, bei dem ein Halbleitersubstrat bereitgestellt wird, auf das eine Wasserstoffspeicherschicht ausgebildet wird, wobei die Elektrolytmembran auf der Wasserstoffspeicherschicht ausgebildet wird und wobei auf der gegenüberliegenden Seite der Elektrolytmembran eine für Luft und/oder Sauerstoff durchlässige Kathode ausgebildet wird. Mit dem Verfahren kann also eine Brennstoffzelle monolithisch in ein Halbleitersubstrat integriert werden. Dabei ist es sogar möglich, mehrere Brennstoffzellen nebeneinander in das Halbleitersubstrat zu integrieren und elektrisch in Reihe zu schalten. Das Halbleitersubstrat ist vorzugsweise ein Siliziumsubstrat. Die Wasserstoffspeicherschicht enthält bevorzugt Palladium, das mittels eines üblichen Galvanikverfahrens, Siebdruck und/oder eines Dünnschichtverfahrens, wie Aufsputtern oder Aufdampfen, auf das Halbleitersubstrat aufgebracht wird. Das erfindungsgemäße Verfahren kann insbesondere in einem CMOS-Prozess angewendet werden.

Bei einer Ausführungsform der Erfindung wird die Beschichtung als Folie von der Festkörperoberfläche abgelöst und danach derart auf der zumindest aus dem Halbleitersubstrat und der Wasserstoffspeicherschicht gebildeten Anordnung positioniert wird, dass die Folie die Wasserstoffspeicherschicht flächig überdeckt, wobei danach der mindestens eine Bereich der Beschichtung, in dem die Elektrolytmembran sein soll, belichtet und der mindestens eine unbelichtete Bereich der Beschichtung entfernt wird. Auch bei dieser Ausführungsform der Erfindung wird die Beschichtung direkt auf der Wasserstoffspeicherschicht bzw. dem Halbleitersubstrat strukturiert. Wegen der einfacheren Integration in einen Halbleiterfertigungsprozess wird es jedoch bevorzugt, die Beschichtung mittels Spin Coating auf die zumindest aus dem Halbleitersubstrat und der Wasserstoffspeicherschicht gebildete Anordnung aufzubringen.

Vorteilhaft ist, wenn in dem Halbleitersubstrat eine Kavität oder Grube ausgebildet wird, und wenn die Grube mit der Wasserstoffspeicherschicht befüllt wird. Die mindestens eine Brennstoffzelle kann dadurch planar in das Halbleitersubstrat integriert werden.

Bei einer bevorzugten Ausgestaltung der Erfindung wird in der Grube eine Stress-Kompensationsschicht aus einem duktilen Metall ausgebildet, wobei die Wasserstoffspeicherschicht auf die Stress-Kompensationsschicht aufgebracht wird. Dadurch wird vermieden, dass in der monolithisch in das Halbleitersubstrat integrierten Brennstoffzelle insbesondere bei einer relativ dicken Wasserstoffspeicherschicht Risse auftreten, wenn die Wasserstoffspeicherschicht beim Be- und/oder Entladen des Wasserstoffs ihr Volumen verändert. Das duktile Metall kann insbesondere Zinn, Gold, Silber, Blei, Kadmium und/oder Indium enthalten. Zinn wird wegen seiner Umweltverträglichkeit besonders bevorzugt.

Vorteilhaft ist, wenn in der Grube eine Diffusionsbarriere zum Hemmen oder Sperren des Durchtritts von Wasserstoff ausgebildet wird, wobei die Wasserstoffspeicherschicht und ggf die Kompensationsschicht auf der Diffusionsbarriere ausgebildet wird. Die Brennstoffzelle kann dann über einen langen Zeitraum weitgehend verlustfrei Wasserstoff speichern.

Nachfolgend sind Ausführungsbeispiele der Erfindung anhand der Zeichnung näher erläutert. Es zeigt:
- Fig. 1A bis 1l: Verfahrensschritte zur Herstellung eines mehrere Brennstoffzellen aufweisenden Halbleiterchips, und
- Fig. 2: schematisch eine Seitenansicht einer geschnittenen Brennstoffzelle sowie in einzelnen der Brennstoffzellenbereiche Reaktionsformeln zur Veranschaulichung der beim Entladen ablaufenden chemischen Reaktion.

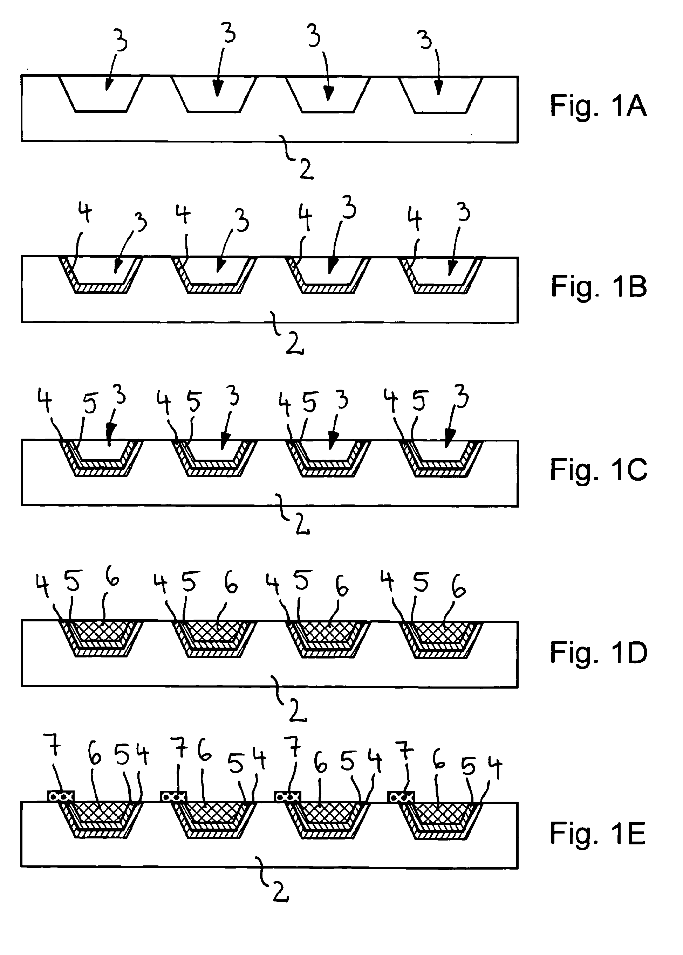

Bei einem Verfahren zum Herstellen von Brennstoffzellen 1 wird ein Halbleitersubstrat 2 aus Silizium bereitgestellt, in dessen Oberfläche eine der Anzahl der herzustellenden Brennstoffzellen 1 entsprechende Anzahl von Kavitäten oder Gruben 3 ausgebildet wird, die seitlich voneinander beabstandet sind (Fig. 1A).

Die Gruben können beispielsweise durch nasschemisches Ätzen mit KOH⁻ oder Trockenätzen in das Halbleitersubstrat 2 eingebracht werden. Dabei wird auf die Oberftäche des Halbleitersubstrats 2 zunächst eine ätzfeste Maske aufgebracht, die an den Stellen, an denen die Gruben 3 sein sollen, jeweils eine Öffnung aufweist. Danach wird die Oberfläche der aus dem Halbleitersubstrat 2 und der Ätzmaske bestehenden Anordnung ganzflächig mit einem Ätzmittel in Kontakt gebracht, wobei an den Stellen, an denen Öffnungen sind, durch eine chemische Reaktion zwischen dem Ätzmittel und dem Halbleitersubstrat 2 Material von dem Halbleitersubstrat 2 abgetragen wird. Nachdem die Gruben 3 mit den gewünschten Abmessungen in das Halbleitersubstrat 2 eingeätzt wurden, werden das Ätzmittel und die ätzfeste Maske vom Halbleitersubstrat 2 entfernt.

In einem weiteren Verfahrensschritt wird in den Gruben 3 jeweils eine Diffusionsbarriere 4 zum Hemmen oder Sperren des Durchtritts von Wasserstoff ausgebildet. In Fig. 1B. ist erkennbar, dass die Diffusionsbarrieren 4 den Boden und die Seitenwände der Gruben 3 vollständig bedecken.

Anschließend wird auf die Diffusionsbarrieren 4 eine Stress-Kompensationsschicht 5 aus einem duktilen Metall, wie z.B. Zinn ausgebildet (Fig. 1C). Die den einzelnen Gruben 3 zugeordneten Stress-Kompensationsschichten 5 bedecken jeweils den Boden und die Seitenwände der Gruben 3 vollständig.

Es ist aber auch möglich, zuerst die Diffusionsbarrieren 4 auf dem Halbleitersubstrat 2 und danach die Stress-Kompensationsschichten 5 auf den Diffusionsbarrieren 4 auszubilden.

In einem in Fig. 1D dargestellten weiteren Verfahrensschritt werden die verbleibenden Gruben 3 mit einer Wasserstoffspeicherschicht 6 aus Palladium befüllt, beispielsweise mittels eines üblichen Gaivanikverfahrens. Anschließend erfolgt ein Planarisieren der Oberfläche mittels einer Poliermaschine, um eine durchgehend ebene Oberfläche über das Halbleitersubstrat 2, die Wasserstoffspeicherschichten 6 und die an die Oberfläche ragenden Ränder der Stress-Kompensationsschichten 5 und der Diffusionsbarrieren 4 zu erhalten.

Danach werden als Anoden für die Brennstoffzellen 1 erste elektrische Elektroden 7 derart auf die Oberfläche aufgebracht, dass diese jeweils eine der Wasserstoffspeicherschichten 6 elektrisch kontaktieren. Dazu wird die Oberfläche an den Stellen, an denen die ersten elektrischen Elektroden 7 nicht sein sollen, mittels eines Lithographischritts zunächst mit einer Maske abgedeckt und danach wird eine elektrische Kontaktschicht, beispielsweise eine Goldschicht, flächig auf die Oberftäche aufgedampft. Diese wird durch Entfernen der Maske strukturiert, um die ersten Elektroden 7 zu bilden (Fig. 1E).

In einem weiteren Verfahrensschritt wird eine Lösung bereitgestellt, die folgende Komponenten enthält:
a) Eine ionenleitfähige, wenigstens eine Säuregruppe aufweisende, Vernetzungskomponente, nämlich sulfoniertes Polyetheretherketon,
b) eine photoaktive Substanz, die einen Photoinitiator, nämlich 2,4,6-Trimethylbenzoyldiphenylphosphinoxid, und ein Copolymer, nämlich Trimethylolproantriacetat, aufweist,
c) ggf eine Haftvermittlerkomponente, nämlich Polybenzimidazol, und
d) ein Lösungsmittel.

Die Lösung wird vorzugsweise dadurch erhalten, dass die Komponenten miteinander vermischt und das Gemisch solange gerührt wird, bis sich die Komponenten a), b) und ggf. c) vollständig in dem Lösungsmittel gelöst haben.

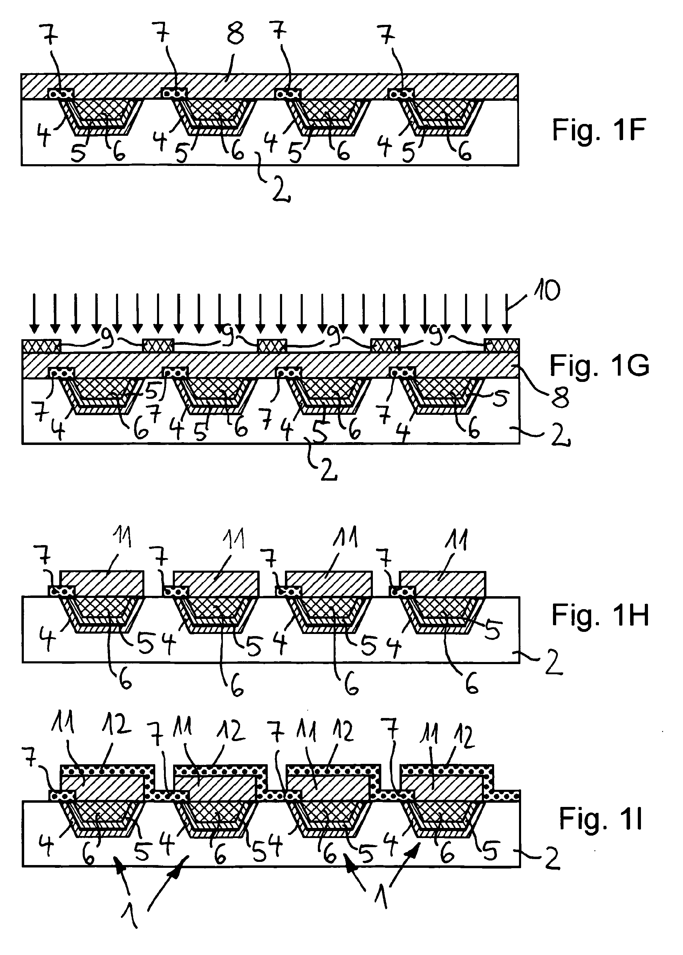

Die so erhaltene Lösung wird nun mittels Spin Coating ganzflächig auf die Festkörperoberfläche der aus dem Halbleitersubstrat 2, den Diffusionsbarrieren 4, den Stress-Kompensationsschichten 5, den Wasserstoffspeicherschichten 6 und den ersten Elektroden 7 bestehenden Anordnung aufgebracht. Dann wird das Lösungsmittel unter Wärmeeinwirkung verdunstet, so dass nur die Komponenten a), b) und ggf c) als Beschichtung 8 auf der Festkörperoberfläche verbleiben (Fig. 1F).

In einem weiteren Verfahrensschritt wird auf die Beschichtung 8 mittels eines Lithographieschritts eine Fotomaske 9 aufgebracht, die diejenigen Stellen abdeckt, an denen keine Elektrolytmembran sein soll (Fig. 1G).

Danach wird die Beschichtung 8 durch die Fotomaske 9 hindurch mit UV-Licht 10 bestrahlt. Bei der Bestrahlung werden die Vernetzungskomponente a) und die photoaktive Substanz b) an den Stellen, die nicht durch die Fotomaske 9 abgedeckt sind, derart kreuzvernetzt, dass sich eine Elektrolytmembran 11 bildet, die an den daran angrenzenden Bereichen der Diffusionsbarrieren 4, der Stress-Kompensationsschichten 5, der Wasserstoffspeicherschichten 6 und der ersten Elektroden 7 anhaftet. In den durch die Fotomaske 9 abgedeckten Bereichen der Beschichtung 8 findet dagegen keine Vernetzung statt.

Nun werden die Fotomaske 9 und die unvernetzten Bereiche der Beschichtung durch Inkontaktbringen mit einem Entwickler von der Festkörperoberfläche entfernt. In Fig. 1H ist erkennbar, dass nun jede der Wasserstoffspeicherschichten 6 jeweils mit einer Elektrolytmembran 11 beschichtet ist und dass die den einzelnen Wasserstoffspeicherschichten 6 zugeordneten Elektrolytmembranen 11 seitlich voneinander beabstandet sind. Die Elektrolytmembranen 11 sind für Protonen durchlässig, lassen jedoch keine Wasserstoffmoleküle durch.

In einem weiteren Verfahrensschritt wird auf der der Wasserstoffspeicherschicht 6 abgewandten Seite der Elektrolytmembran 11 eine für Luft und/oder Sauerstoff durchlässige zweite Elektrode 12 ausgebildet, die als Kathode für die Brennstoffzelle dient. Die zweiten Elektroden 12 werden bevorzugt aus einem Stromkollektor zur elektrischen Rückführung auf das Halbleitersubstrat 2 und einer feinen Platin-Katalysatorschicht auf der Elektrolytmembran 11 aufgebaut. Dadurch sind die zweiten Elektroden 12 für Luft bzw. Luftsauerstoff durchlässig, so dass dieser aus der Atmosphäre zu der zweiten Elektrode 12 gelangen kann. Zur Strukturierung der zweiten Elektroden 12 können mikro-strukturierte Sputtermasken eingesetzt werden, welche mit einem Advanced Slicon-Etching-Tiefenprozess aus beispielsweise 300 µm dicken Silizium-Wafern hergestellt werden können. Die Stegweite der ausgebildeten Lamellenstruktur kann etwa 100 µm betragen.

In Fig. 1I ist erkennbar, dass mehrere in das Halbleitersubstrat 2 integrierte Brennstoffzellen 1 elektrisch in Reihe geschaltet sind. Die zweite Elektrode 12 einer ersten Brennstoffzelle 1 ist dazu elektrisch mit der ersten Elektrode 7 einer zweiten Brennstoffzelle 1 verbunden. Die zweite Elektrode 12 dieser Brennstoffzelle 1 ist wiederum mit der ersten Elektrode 7 einer weiteren Brennstoffzelle 1 verbunden usw.

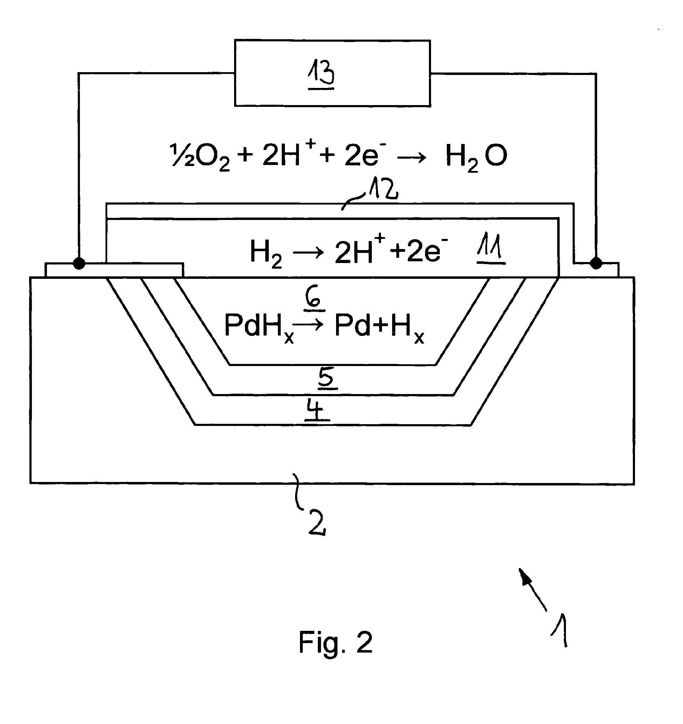

Anhand von Fig. 2 ist die Funktionsweise der Brennstoffzellen 1 ersichtlich. In der Wasserstoffspeicherschicht 6 befindlicher Wasserstoff wird an der Grenzfläche zur Elektrolytmembranen 11 in Protonen H⁺ und Elektronen e⁻ aufgespalten. Die Elektronen gelangen über die erste Elektrode und eine daran angeschlossene elektrische Last 13 zur zweiten Elektrode 12. Die Protonen diffundieren durch die Elektrolytmembran 11 hindurch zu der für Luftsauerstoff O₂ durchlässigen zweite Elektrode 12 und reagieren dort unter Freisetzung von Wasser H₂O mit den Elektronen und dem Luftsauerstoff. Zwischen den Elektroden 7, 12 fließt also über die Last 13 ein elektrischer Strom.

## Patentansprüche

1. Verfahren zum Herstellen einer protonenleitfähigen, strukturierten Elektrolytmembran (11) insbesondere für eine Brennstoffzelle (1), wobei auf eine Festkörperoberftäche eine Beschichtung (8) aufgebracht wird, die zumindest eine ionenleitfähige, wenigstens eine Säuregruppe aufweisende, Vernetzungskomponente und mindestens eine damit zusammenwirkende photoaktive Substanz enthält, wobei die Beschichtung (8) optisch maskiert wird, indem mindestens ein Bereich der Beschichtung, in dem die Elektrolytmembran sein (11) soll, derart belichtet wird, dass die Vernetzungskomponente mit der photoaktiven Substanz zu einem an der Festkörperoberfiäche anhaftenden Polymer- und/oder Copolymernetzwerk vernetzt, und dass danach zum Strukturieren der Elektrolytmembran (11) mindestens ein unbelichteter Bereich der Beschichtung (8) entfernt wird.

2. Verfahren nach Anspruch 1, wobei die Vernetzungskomponente und die mindestens eine photoaktive Substanz in einem Lösungsmittel gelöst auf die Festkörperoberfläche vorzugsweise durch Spin Coating aufgetragen wird, und dass das Lösungsmittel danach zum Bilden der Beschichtung verdunstet wird.

3. Verfahren nach Anspruch 1 oder 2, wobei die Vernetzungskomponente mindestens eine Säuregruppe aufweist, insbesondere eine Sulfonsäuregruppe, eine Phosporsäuregruppe und/oder eine Carbonsäuregruppe aufweist.

4. Verfahren nach einem der Ansprüche 1 bis 3, wobei die Vernetzungskomponente sulfoniertes Polyetherketon und/oder sulfoniertes Polyetheretherketon enthält.

5. Verfahren nach einem der Ansprüche 1 bis 4, wobei die photoaktive Substanz einen Photoinitiator, insbesondere 2,4,6-Trimethylbenzoyldiphenylphosphinoxid enthält.

6. Verfahren nach einem der Ansprüche 1 bis 5, wobei die photoaktive Substanz ein Copolymer enthält, insbesondere Trimethylolpropantriacetat.

7. Verfahren nach einem der Ansprüche 1 bis 6, wobei die Beschichtung eine Haftvermittlerkomponente enthält, vorzugsweise Polybenzimidazol.

8. Verfahren zum Herstellen mindestens einer Brennstoffzelle (1) mit einer Elektrolytmembran nach einem der Ansprüche 1 bis 7, wobei ein Halbleitersubstrat (2) bereitgestellt wird, auf dem eine Wasserstoffspeicherschicht (6) ausgebildet wird, wobei die Elektrolytmembran (11) auf der Wasserstoffspeicherschicht (6) ausgebildet wird und wobei auf der gegenüberliegenden Seite der Elektrolytmembran (1) eine für Luft und/oder Sauerstoff durchlässige Kathode ausgebildet wird.

9. Verfahren nach Anspruch 8, wobei die Beschichtung als Folie von der Festkörperoberfläche abgelöst und danach derart auf der zumindest aus dem Halbleitersubstrat (2) und der Wasserstoffspeicherschicht (6) gebildeten Anordnung positioniert wird, dass die Folie die Wasserstoffspeicherschicht (6) flächig überdeckt, und wobei danach der mindestens eine Bereich der Beschichtung (8), in dem die Elektrolytmembran (11) sein soll, belichtet und der mindestens eine unbelichtete Bereich der Beschichtung (8) entfernt wird.

10. Verfahren nach Anspruch 8 oder 9, wobei in dem Halbleitersubstrat (2) eine Kavität oder Grube ausgebildet wird, und wobei die Grube (3) mit der Wasserstoffspeicherschicht (6) befüllt wird.

11. Verfahren nach Anspruch 10, wobei in der Grube (3) eine Stress-Kompensationsschicht (5) aus einem duktilen Metall ausgebildet wird, und wobei die Wasserstoffspeicherschicht (6) auf die Stress-Kompensationsschicht (5) aufgebracht wird.

12. Verfahren nach Anspruch 10 oder 11, wobei in der Grube (3) eine Diffusionsbarriere (4) zum Hemmen oder Sperren des Durchtritts von Wasserstoff ausgebildet wird, und wobei die Wasserstoffspeicherschicht (6) und ggf die Stress-Kompensationsschicht auf der Diffusionsbarriere (4) ausgebildet wird.
